# EUROPEAN PATENT APPLICATION

(11) **EP 4 394 154 A1**
(43) Date of publication of application: **03.07.2024**
(21) Application number: 22900299.3
(22) Date of filing: 18.11.2022
(51) Int. Cl.: E05B 85/10

(54) **EXTERIOR VEHICLE DOOR HANDLE, VEHICLE DOOR ASSEMBLY, AND VEHICLE**

(30) Priority: 30.11.2021 CN 202111451995
(71) Applicant: BYD Company Limited, Shenzhen, Guangdong 518118 (CN)
(72) Inventor: LUO, Zhongliang, Shenzhen, Guangdong 518118 (CN); JIANG, Xuyao, Shenzhen, Guangdong 518118 (CN); ZHANG, Xiaoqiang, Shenzhen, Guangdong 518118 (CN); LI, Ming, Shenzhen, Guangdong 518118 (CN)
(74) Representative: Arnold & Siedsma
(86) International application number: PCT/CN2022/132964
(87) International publication number: WO 2023/098494

(57) **Abstract**

A vehicle, provided with a vehicle door assembly. The vehicle door assembly includes an exterior vehicle door handle, and the exterior vehicle door handle includes a base and a handle grip. The base is provided with a handle cavity and configured for being mounted on a vehicle door. The handle grip is rotatably mounted on the base between a closed position and an open position. When the handle grip is in the closed position, an outer surface of the handle grip does not protrude from an outer surface of the vehicle door and covers the handle cavity, and when the handle grip rotates from the closed position to the open position by rotating towards an interior of the handle cavity, the handle grip does not protrude from the outer surface of the vehicle door and the handle cavity is exposed.

## Description

### CROSS-REFERENCE TO RELATED APPLICATIONS

The present disclosure claims priority to Chinese Patent Application No. 202111451995.X, filed on November 30, 2021 and entitled "EXTERIOR VEHICLE DOOR HANDLE, VEHICLE DOOR ASSEMBLY, AND VEHICLE". The entire content of the above-referenced application is incorporated herein by reference.

### FIELD

The present disclosure relates to the field of vehicles, and more specifically to an exterior vehicle door handle, a vehicle door assembly, and a vehicle.

### BACKGROUND

An exterior vehicle door handle in the related art generally includes a base and a handle grip. The handle grip is usually in an exposed state, not only has an unclean appearance, but may also be scratched by objects outside a vehicle, and is easily damaged. Therefore, some exterior vehicle door handles are configured to be hidden. When locked, the handle grip of the exterior vehicle door handle is in a hidden state, that is, the handle grip does not protrude from a vehicle door. However, when being in an unlocked state, the handle grip rotates outwards and protrudes from an outer surface of the vehicle door. When a motor does not perform a rotation operation, there is always a problem that the handle grip protrudes from the outer surface of the vehicle door. The handle grip in the exposed state not only affects the cleanliness of the vehicle and use experience of customers, but also increases traveling wind resistance of the vehicle, causing an increase in energy consumption of the vehicle. In addition, when the temperature is relatively low, there may be frost on the outer surface of the vehicle door, making it inconvenient to rotate the handle grip outwards.

### SUMMARY

The present disclosure aims to solve at least one of the technical problems existing in the related art. With this regard, an object of the present application is to provide an exterior vehicle door handle. The exterior vehicle door handle can be completely hidden, and has the advantages of neat appearance, high use safety, convenient rotation, low wind resistance and the like.

The present disclosure further provides a vehicle door assembly having the foregoing exterior vehicle door handle.

The present disclosure further provides a vehicle having the foregoing vehicle door assembly.

To achieve the foregoing object, according to an embodiment of a first aspect of the present disclosure, an exterior vehicle door handle is provided, which includes: a base, the base being provided with a handle cavity and configured for being mounted on a vehicle door; and a handle grip, the handle grip being rotatably mounted on the base between a closed position and an open position, when the handle grip is in the closed position, an outer surface of the handle grip not protruding from an outer surface of the vehicle door and covering the handle cavity, and when the handle grip rotates from the closed position to the open position by rotating towards an interior of the handle cavity, the handle grip not protruding from the outer surface of the vehicle door and the handle cavity being exposed.

The exterior vehicle door handle according to the embodiment of the present disclosure can be completely hidden, and has the advantages of neat appearance, high use safety, convenient rotation, low wind resistance and the like.

According to some embodiments of the present disclosure, when the handle grip is in the closed position, the outer surface of the handle grip is flush with the outer surface of the vehicle door.

According to some embodiments of the present disclosure, the vehicle door covers a portion of the handle cavity. When being in the closed position, the handle grip covers another portion of the handle cavity, and when being in the open position, the handle grip abuts, in the vehicle door, against the portion of the vehicle door covering the handle cavity.

According to some embodiments of the present disclosure, the handle grip is provided with a rotating shaft, the handle grip is rotatably mounted on the base by the rotating shaft, and the rotating shaft is located at a lower edge of the handle grip when the handle grip is in the closed position.

According to some embodiments of the present disclosure, the exterior vehicle door handle further includes: a driving device, the driving device being configured for being connected to a vehicle door lock and connected to the handle grip, and the driving device driving the handle grip to an intermediate position between the open position and the closed position when the vehicle door lock is unlocked, where an angle by which the handle grip rotates from the closed position to the intermediate position is greater than an angle by which the handle grip rotates from the intermediate position to the open position.

According to some embodiments of the present disclosure, the handle grip rotates from the closed position to the intermediate position by rotating 110° to 120° towards the interior of the handle cavity; and the handle grip rotates from the intermediate position to the open position by rotating 50° to 60° towards the interior of the handle cavity.

According to some embodiments of the present disclosure, the driving device is a motor, the motor is mounted outside the base, and the motor is drive-connected to the handle grip and configured for communication of the vehicle door lock.

According to some embodiments of the present disclosure, the driving device includes: a push rod, one end of the push rod being configured for being drive-connected to the vehicle door lock; and an unlocking crank, the unlocking crank being drive-connected to the handle grip and connected to another end of the push rod by an unlocking push rod buckle.

According to an embodiment of a second aspect of the present disclosure, a vehicle door assembly is provided, which includes: a vehicle door; and the exterior vehicle door handle according to the embodiment of the first aspect of the present disclosure.

According to the vehicle door assembly according to the embodiment of the second aspect of the present disclosure, by using the exterior vehicle door handle according to the embodiment of the first aspect of the present disclosure, the exterior vehicle door handle can be completely hidden, and has the advantages of neat appearance, high use safety, convenient rotation, low wind resistance and the like.

According to some embodiments of the present disclosure, the vehicle door includes: an exterior vehicle door panel and an interior vehicle door panel, the exterior vehicle door panel being mounted on an outer side of the interior vehicle door panel, the base being mounted on the exterior vehicle door panel and arranged between the exterior vehicle door panel and the interior vehicle door panel, and the exterior vehicle door panel being provided with a handle opening, a position of the handle opening corresponding to a position of the handle cavity.

According to some embodiments of the present disclosure, one side of the exterior vehicle door panel facing the interior vehicle door panel is provided with a first positioning protrusion and a second positioning protrusion spaced apart in an up-down direction. The base is provided with a first fixing lug and second fixing lugs. The base is arranged between the first positioning protrusion and the second positioning protrusion. The first fixing lug is fixed on one side of the first positioning protrusion facing the interior vehicle door panel. The second fixing lugs are fixed on one side of the second positioning protrusion facing the interior vehicle door panel.

According to an embodiment of a third aspect of the present disclosure, a vehicle is provided, which includes the vehicle door assembly according to the embodiment of the second aspect of the present disclosure.

In the vehicle according to the embodiment of the third aspect of the present disclosure, the exterior vehicle door handle can be completely hidden by using the vehicle door assembly according to the embodiment of the second aspect of the present disclosure, and has the advantages of neat appearance, high use safety, convenient rotation, low wind resistance and the like.

Other aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description of the embodiments made with reference to the following accompanying drawings.
FIG. 1 is a schematic structural diagram of a handle grip of an exterior vehicle door handle in a closed position according to an embodiment of the present disclosure;
FIG. 2 is a schematic structural diagram of a handle grip of an exterior vehicle door handle in an open position according to an embodiment of the present disclosure;
FIG. 3 is a schematic structural diagram of an exterior vehicle door handle according to an embodiment of the present disclosure; and
FIG. 4 is a schematic structural diagram of an exterior vehicle door handle according to an embodiment of the present disclosure at another angle of view.

### REFERENCE NUMERALS:

Exterior vehicle door handle 1, exterior vehicle door panel 2, base 100, handle cavity 110, handle grip 200, rotating shaft 210, unlocking crank 300, unlocking push rod buckle 310, handle opening 400, first positioning protrusion 500, second positioning protrusion 600, first fixing lug 700, second fixing lug 800, limiting portion 900.

### DETAILED DESCRIPTION

The embodiments of the present disclosure are described in detail below, and the embodiments described with reference to accompanying drawings are exemplary.

In the description of the present disclosure, it should be understood that orientations or position relationships indicated by terms such as "center", "longitudinal", "transverse", "length", "width", "thickness", "on", "below", "front", "back", "left", "right", "vertical", "horizontal", "top", "bottom", "inner", "outer", "clockwise", "counterclockwise", "axial", "radial", and "circumferential" are orientations or position relationships shown based on the accompanying drawings, and are merely used for describing the present disclosure and simplifying the description, rather than indicating or implying that the mentioned apparatus or element should have a particular orientation or be constructed and operated in a particular orientation, and therefore should not be construed as a limitation on the present disclosure.

In the description of the present disclosure, "a plurality of" means two or more than two.

An exterior vehicle door handle 1 according to an embodiment of the present disclosure is described below with reference to the accompanying drawings.

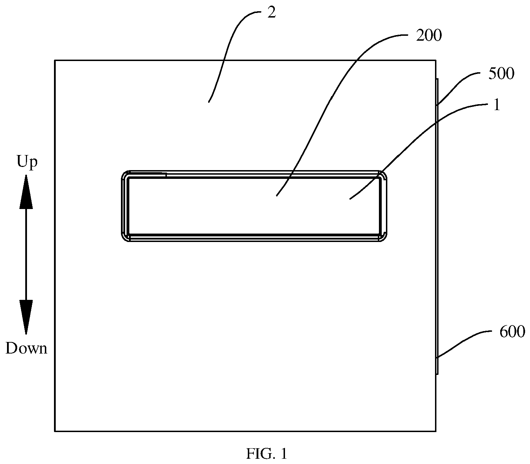

As shown in FIG. 1 to FIG. 4, the exterior vehicle door handle 1 according to the embodiment of the present disclosure includes a base 100 and a handle grip 200.

The base 100 is provided with a handle cavity 110 and configured for being mounted on a vehicle door. The handle grip 200 is rotatably mounted on the base 100 between a closed position and an open position. When the handle grip 200 is in the closed position, an outer surface of the handle grip 200 does not protrude from an outer surface of the vehicle door and covers the handle cavity 110, and when the handle grip 200 rotates from the closed position to the open position by rotating towards an interior of the handle cavity 110, the handle grip 200 does not protrude from the outer surface of the vehicle door and the handle cavity 110 is exposed.

The handle grip 200 being in the closed position refers to that the vehicle door is in a locked state and cannot be open. The handle grip 200 being in the open position refers to that the vehicle door is in an unlocked state, and a user may open the vehicle door by pulling the handle grip 200. By rotating the handle grip 200 from the closed position to the open position, the vehicle door may be controlled to change from the locked state to the unlocked state.

In the exterior vehicle door handle 1 according to the embodiment of the present disclosure, the base 100 is provided with the handle cavity 110 and configured for being mounted on the vehicle door, such that the handle grip 200 is rotatably mounted on the base 100 between the closed position and the open position. There is a vehicle door space inside the vehicle door for mounting the exterior vehicle door handle 1. An operation space for the user to operate the handle grip 200 may be reserved in the handle cavity 110, and the user may put a hand into the handle cavity 110 of the base 100 to touch the handle grip 200 and control the opening and closing of the vehicle door. Moreover, the base 100 may separate the handle cavity 110 from other components inside the vehicle door, to prevent the user from touching other components while touching the handle grip 200, and prevent dust and liquid from entering the vehicle door space via the handle cavity 110 when the handle cavity 110 is exposed, thereby ensuring the cleanliness of the vehicle door space and reducing the probability of corrosion of parts in the vehicle door space.

In addition, when the handle grip 200 is in the closed position, the outer surface of the handle grip 200 does not protrude from the outer surface of the vehicle door and covers the handle cavity 110, and when the handle grip 200 rotates from the closed position to the open position by rotating towards the interior of the handle cavity 110, the handle grip 200 does not protrude from the outer surface of the vehicle door and the handle cavity 110 is exposed.

Therefore, when the handle grip 200 is in the closed position, the handle grip 200 is in a hidden state, and the handle grip 200 and the vehicle door look more like a whole. When the user looks at the vehicle door, the handle grip 200 does not appear obtrusive, and the outer surface of the vehicle door is more aesthetic and cleaner. When the handle grip 200 rotates from the closed position to the open position, the handle grip 200 rotates towards the interior of the vehicle door. In this case, the handle grip 200 still does not protrude from the outer surface of the vehicle door, such that the handle grip 200 can be prevented from being exposed to the exterior of the vehicle door, and the handle grip 200 is in the hidden state regardless of being in a closed state, an open state, or any position between the closed state and the open state. In this way, the vehicle door is relatively clean in the locked state or unlocked state, and the handle grip 200 will not collide with or scratch objects outside the vehicle, such that high use safety is achieved. Moreover, when the temperature is relatively low, even if the outer surface of the vehicle door is frosted due to cold, the rotation of the handle grip 200 towards the interior of the vehicle will not be affected by frost on the outer surface of the vehicle door, such that the handle grip 200 still rotates smoothly when the temperature is relatively low.

In addition, when the handle grip 200 rotates from the closed position to the open position, the handle cavity 110 is exposed, such that the user can put a hand into the handle cavity 110 to open the vehicle door by pulling the handle grip 200, and better use experience is achieved. Moreover, when the handle grip 200 is in the closed position or open position, the handle grip 200 does not protrude from the outer surface of the vehicle door. In this way, the handle grip 200 can be prevented from increasing wind resistance of the vehicle when the vehicle is traveling, such that driving resistance of the vehicle is smaller, thereby reducing energy consumption of the vehicle.

Therefore, the exterior vehicle door handle 1 according to the embodiment of the present disclosure can be completely hidden, and has the advantages of neat appearance, high use safety, convenient rotation, low wind resistance and the like.

In some specific embodiments of the present disclosure, as shown in FIG. 1, when the handle grip 200 is in the closed position, the outer surface of the handle grip 200 is flush with the outer surface of the vehicle door.

In this way, when being in the closed position, the handle grip 200 may be in the hidden state, such that the outer surface of the vehicle door has higher integrity and the whole vehicle has a higher aesthetic appearance. Moreover, a joint between the handle grip 200 and the vehicle door is kept flush, such that dust is not easily accumulated, making the outer surface of the vehicle door cleaner.

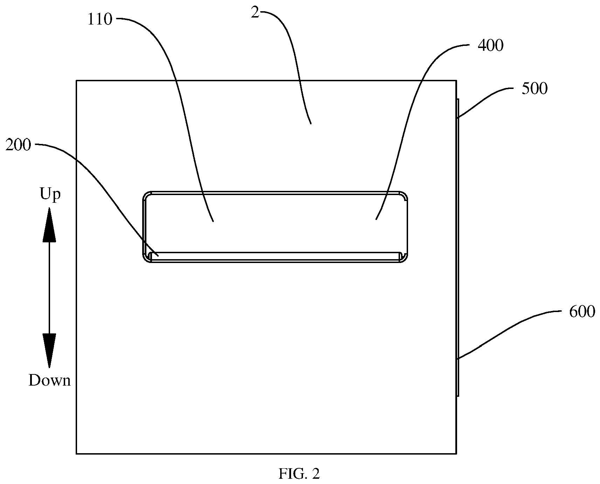

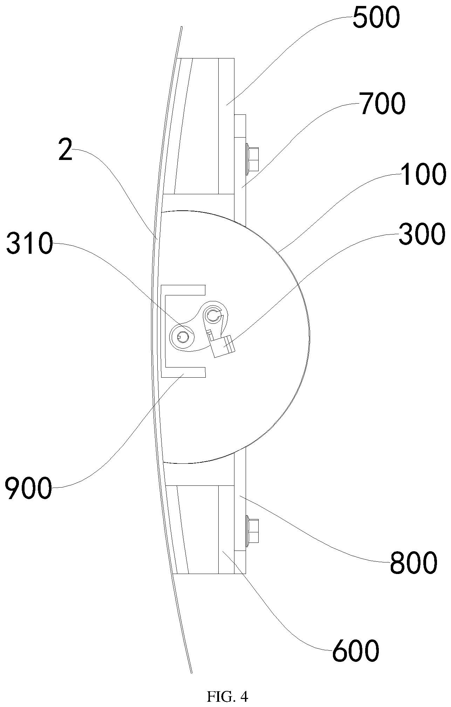

In some specific embodiments of the present disclosure, as shown in FIG. 2 and FIG. 4, the vehicle door covers a portion of the handle cavity 110. When being in the closed position, the handle grip 200 covers another portion of the handle cavity 110, and when being in the open position, the handle grip 200 abuts, in the vehicle door, against the portion of the vehicle door covering the handle cavity 110.

For example, one side of the base 100 facing away from a passenger compartment is open. When the handle grip 200 is in the closed position, the handle grip 200 and the vehicle door cover the open portion of the base 100, to seal the handle cavity 110. When the handle grip 200 is in the open position, a portion of the base 100 is open, to achieve communication between the handle cavity 110 and the outside world. Moreover, an outer contour and an inner contour of a cross section of the base 100 are both arc-shaped. In this way, a uniform wall thickness of the handle cavity 110 can be ensured, and the materials, weight, and costs of the base 100 can also be reduced while ensuring an adequate operation space for a human hand. In addition, the base 100 is evenly stressed and is not prone to stress concentration.

In other words, a cross-sectional area of the handle cavity 110 is greater than a cross-sectional area of the handle grip 200. In this way, the handle grip 200 may rotate in the handle cavity 110, such that the handle grip 200 can be switched between the open position and the closed position. Moreover, when the handle grip 200 is in the closed position, the user may put a hand into the portion of the handle cavity 110 covered by the vehicle door, and a relatively large operation space for the user to operate the handle grip 200 may be reserved in the handle cavity 110, making the operation more convenient.

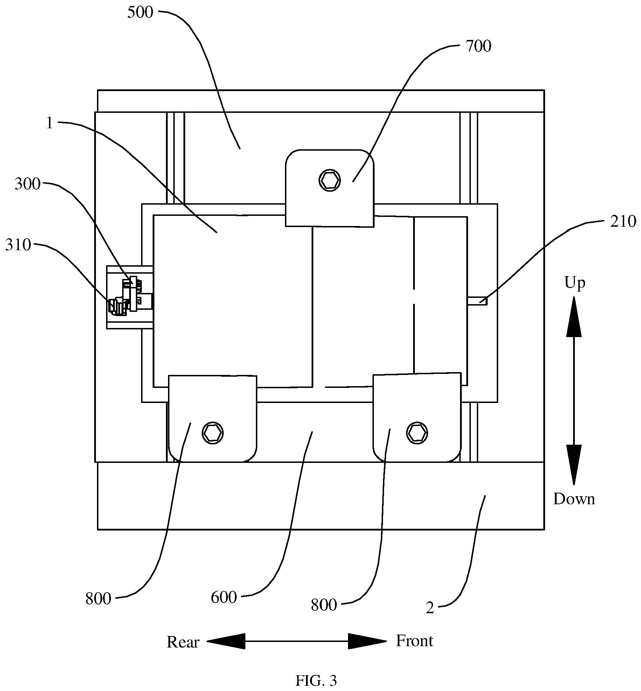

In some specific embodiments of the present disclosure, as shown in FIG. 2 and FIG. 3, the handle grip 200 is provided with a rotating shaft 210. The handle grip 200 is rotatably mounted on the base 100 by the rotating shaft 210. The rotating shaft 210 is located at a lower edge of the handle grip 200 when the handle grip 200 is in the closed position.

Specifically, the rotating shaft 210 may extend in a horizontal direction, and both ends of the rotating shaft 210 may extend out of front and rear sides of the handle grip 200. Front and rear sides of the base 100 may be provided with rotating shaft holes, and both ends of the rotating shaft 210 are respectively fitted to the rotating shaft holes. In this way, by the fitting between the rotating shaft 210 and the rotating shaft holes, the handle grip 200 may rotate relative to the base 100, and a rotating structure is simple and easy to implement. Moreover, the rotating shaft 210 has a relatively small volume, and does not need to occupy a relatively large space when being arranged on the vehicle door, making the arrangement more convenient.

In addition, since most people's dominant hand is their right hand under natural circumstances, and a palm of the right hand usually extends out leftwards or downwards, rotating the handle grip 200 with the lower edge thereof as an axis of rotation is more in line with force exertion habits of a human body, thereby facilitating use by the user.

Furthermore, as shown in FIG. 3 and FIG. 4, the exterior vehicle door handle 1 further includes a driving device. The driving device is configured for being connected to a vehicle door lock and is connected to the handle grip 200. When the vehicle door lock is unlocked, the driving device drives the handle grip 200 to an intermediate position between the open position and the closed position, and an angle by which the handle grip rotates from the closed position to the intermediate position is greater than an angle by which the handle grip rotates from the intermediate position to the open position.

In other words, in the process of rotating from the closed position to the open position, the handle grip 200 first passes through the intermediate position. When the handle grip 200 is in the intermediate position, the vehicle door is in the unlocked state, and the user may open the vehicle door by pressing the handle grip 200 and pulling same towards the exterior of the vehicle, and when the user does not press the handle grip 200 to the open position, the vehicle door is still in a closed state. In this way, the vehicle door can be double locked to prevent the vehicle door from being directly open due to accidental touch by the user, such that higher safety is achieved.

For example, the user may emit an unlocking signal by a Bluetooth key of the vehicle, and the vehicle door lock unlocks the vehicle door after receiving the unlocking signal. In this case, the driving device operates and drives the handle grip 200 to rotate from the closed position to the intermediate position to expose the handle cavity 110, and the user may observe that the vehicle door is already in the unlocked state, and may then open the vehicle door by putting the hand into the handle cavity 110 and pressing and pulling the handle grip 200.

Optionally, the handle grip 200 rotates from the closed position to the intermediate position by rotating 110° to 120° towards the interior of the handle cavity 110, and the handle grip 200 rotates from the intermediate position to the open position by rotating 50° to 60° towards the interior of the handle cavity 110, that is, the handle grip 200 needs to rotate 160° to 180° to rotate from the closed position to the open position.

By rotating the handle grip 200 110° to 120° towards the interior of the handle cavity 110, on the one hand, it is convenient for the user to put the hand into the handle cavity 110, and the operation is facilitated; and on the other hand, the handle grip 200 is in a downwardly inclined state in this case, and after putting the hand into the handle cavity 110, the user may conveniently press the surface of the handle grip 200 which faces an inner side of the vehicle when being in the intermediate position, such that the user can exert force towards an outer side of the vehicle to apply the force to the vehicle door and pull the vehicle door open.

In addition, the handle grip 200 needs to rotate 50° to 60° to rotate from the intermediate position to the open position. In this way, the user can feel the rotation of the handle grip 200, to feel the effectiveness of the operation more intuitively. Moreover, when the handle grip 200 is in the closed position, the outer surface of the handle grip 200 is flush with the outer surface of the vehicle door, that is, the handle grip 200 is in a vertical state. Since the handle grip 200 needs to rotate 160° to 180° to rotate from the closed position to the open position, that is, when the handle grip 200 is in the open position, the handle grip 200 is also nearly in the vertical state, and it is easier for fingers to exert force after touching the handle grip 200. In this way, it is more convenient for the user to pull the handle grip 200. Most of the force applied to the handle grip 200 by the user is used for pulling the vehicle door open, which is more labor-saving and consumes less energy.

In some embodiments of the present disclosure, the driving device is a motor (not illustrated in the figures). The motor is mounted outside the base 100. The motor is drive-connected to the handle grip 200 and configured for communication of the vehicle door lock. Therefore, after the vehicle door lock is open, a signal may be transmitted to the motor, and the motor can control the handle grip 200 to rotate according to an unlocking signal, thereby rotating the handle grip 200 to the intermediate position while unlocking the vehicle door, and further facilitating user operations. Moreover, the motor has good locking performance, and the handle grip 200 may be positioned reliably. The motor may further reset the handle grip 200 from the intermediate position to the closed position.

In some other embodiments of the present disclosure, as shown in FIG. 3 and FIG. 4, the driving device includes a push rod and an unlocking crank 300.

Specifically, one end of the push rod is configured for being drive-connected to the vehicle door lock, and the unlocking crank 300 is drive-connected to the handle grip 200 and connected to another end of the push rod by an unlocking push rod buckle 310. Therefore, when being unlocked, the vehicle door lock may drive the push rod to move, the push rod then drives, by the unlocking push rod buckle 310, the unlocking crank 300 to rotate, and while rotating, the unlocking crank 300 may drive the handle grip 200 to rotate to the intermediate position, to implement the rotation of the handle grip 200 between the closed position and the intermediate position.

For example, the unlocking crank 300 may be connected to the rotating shaft 210 and rotate synchronously with the rotating shaft 210. A rear end of the rotating shaft 210 extends out of a rear end of the base 100. The unlocking crank 300 is connected to the rear end of the rotating shaft 210. The unlocking crank 300 is located outside the handle cavity 110 of the base 100. A rear end surface of the base 100 may be provided with a limiting portion 900. The limiting portion 900 may define a rotation angle of the unlocking crank 300, to prevent normal use of the vehicle door lock from being affected due to excessive rotation of the unlocking crank 300.

Moreover, when the handle grip 200 is pushed from the intermediate position to the open position by the human hand, the rotating shaft 210 drives the unlocking crank 300 to rotate to push the push rod to move, thereby completely unlocking the vehicle door lock. In this case, the vehicle door may rotate relative to a vehicle body to expose the passenger compartment.

The vehicle door lock is used to drive, by the unlocking crank 300, the handle grip 200 to rotate. In this way, there is no need to additionally provide other driving mechanisms (such as the motor), the number of parts of the exterior vehicle door handle 1 is reduced, such that the costs are reduced, and miniaturization and lightweight configurations of the exterior vehicle door handle 1 are also facilitated.

It should be noted that: when the driving device is a motor, the handle grip 200 is still connected to the unlocking crank 300, and in this case, the unlocking crank 300 may not assume the function of driving the handle grip 200 from the closed position to the intermediate position. Moreover, the foregoing two modes of moving the handle grip 200 from the closed position to the intermediate position may be set at the same time. Therefore, when one of the two modes cannot work properly, there is a backup scheme to open the vehicle door, providing more diverse modes for opening the vehicle door from outside the vehicle, and facilitating use by the user.

The vehicle door assembly according to an embodiment of the present disclosure is described below with reference to the accompanying drawings. The vehicle door assembly includes a vehicle door and the exterior vehicle door handle 1 according to the foregoing embodiment of the present disclosure.

In the vehicle door assembly according to the embodiment of the present disclosure, the exterior vehicle door handle 1 can be completely hidden by using the exterior vehicle door handle 1 according to the foregoing embodiment of the present disclosure, and has the advantages of neat appearance, high use safety, convenient rotation, low wind resistance and the like.

In some specific embodiments of the present disclosure, as shown in FIG. 1 to FIG. 4, the vehicle door includes an exterior vehicle door panel 2 and an interior vehicle door panel. The exterior vehicle door panel 2 is mounted on an outer side of the interior vehicle door panel, that is, the exterior vehicle door panel 2 is mounted on one side of the interior vehicle door panel facing away from the passenger compartment. The base 100 is mounted on the exterior vehicle door panel 2 and is arranged between the exterior vehicle door panel 2 and the interior vehicle door panel. The exterior vehicle door panel 2 is provided with a handle opening 400, a position of the handle opening 400 corresponding to a position of the handle cavity 110.

For example, the exterior vehicle door panel 2 and the interior vehicle door panel may together define a door panel space for accommodating the driving device and the exterior vehicle door handle 1, such that the driving device and the exterior vehicle door handle 1 can be protected, and an outer surface of the vehicle door assembly may also be cleaner, thereby facilitating the overall assembling and disassembling of the vehicle door assembly. In addition, the outer surface of the exterior vehicle door panel 2 is located on an outer side of the whole vehicle, to facilitate access by a passenger. By providing the exterior vehicle door panel 2 with the handle opening 400, the passenger can access the exterior vehicle door handle 1 more conveniently. In this way, the opening of the vehicle door is more convenient and faster.

Furthermore, as shown in FIG. 3 and FIG. 4, one side of the exterior vehicle door panel 2 facing the interior vehicle door panel is provided with a first positioning protrusion 500 and a second positioning protrusion 600. The base 100 is provided with a first fixing lug 700 and second fixing lugs 800. The base 100 is arranged between the first positioning protrusion 500 and the second positioning protrusion 600. The first fixing lug 700 is fixed on one side of the first positioning protrusion 500 facing the interior vehicle door panel, and the second fixing lugs 800 are fixed on one side of the second positioning protrusion 600 facing the interior vehicle door panel.

For example, the first fixing lug 700 and the first positioning protrusion 500 may be connected by a threaded fastener such as a bolt, and the second fixing lugs 800 and the second positioning protrusion 600 may be connected by threaded fasteners such as bolts. There may be either multiple first fixing lugs 700 or multiple second fixing lugs 800. For example, there are two second fixing lugs 800 and one first fixing lug 700, and the first fixing lug 700 may be located between the two second fixing lugs 800 in a front-rear direction. In this way, by arranging the first fixing lug 700 and the second fixing lugs 800 in a staggered manner in a length direction of the base 100, fixing force received by the base 100 in the length direction is more uniform, making the position of the base 100 more stable.

In addition, because the first positioning protrusion 500 and the second positioning protrusion 600 both protrude from an inner side surface of the exterior vehicle door panel 2 towards the interior vehicle door panel, the mounting of the base 100 between the first positioning protrusion 500 and the second positioning protrusion 600 makes the base 100 closer to the inner side surface of the exterior vehicle door panel 2, or even attached to the inner side surface of the exterior vehicle door panel 2. In this way, the size of the portion of the base 100 protruding from the inner side surface of the exterior vehicle door panel 2 is smaller, and the reduction of the overall sizes of the exterior vehicle door panel 2 and the base 100 in a left-right direction is facilitated, such that space utilization can be improved.

In addition, one side of the first positioning protrusion 500 facing the interior vehicle door panel and one side of the second positioning protrusion 600 facing the interior vehicle door panel may each be a plane. The first fixing lug 700 and the second fixing lugs 800 are all planes extending in an up-down direction. In this way, an attachment area between the first fixing lug 700 and the first positioning protrusion 500 is larger, and an attachment area between each second fixing lug 800 and the second positioning protrusion 600 is larger, such that the improvement of the strength of connection between the base 100 and the exterior vehicle door panel 2 is facilitated.

The distance between an upper edge of the first positioning protrusion 500 and a lower edge of the second positioning protrusion 600 is greater than the distance between an upper edge of the first fixing lug 700 and lower edges of the second fixing lugs 800. In this way, the first fixing lug 700 and the second fixing lugs 800 do not protrude from the first positioning protrusion 500 and the second positioning protrusion 600 in the up-down direction, and the fixation of the base 100 is more reliable.

The vehicle according to an embodiment of the present disclosure is described below with reference to the accompanying drawings. The vehicle includes the vehicle door assembly according to the foregoing embodiment of the present disclosure.

In the vehicle according to the embodiment of the present disclosure, the exterior vehicle door handle 1 can be completely hidden by using the vehicle door assembly according to the foregoing embodiment of the present disclosure, and has the advantages of neat appearance, high use safety, low wind resistance and the like.

Other configurations and operations of the exterior vehicle door handle 1, vehicle door assembly and vehicle according to the embodiments of the present disclosure are known to those of ordinary skill in the art, and will not be described in detail herein.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of this application. In this specification, schematic descriptions of the foregoing terms do not necessarily refer to a same embodiment or example.

Although the embodiments of the present disclosure have been shown and described, those of ordinary skill in the art may understand that various changes, modifications, replacements and variations may be made to the embodiments without departing from the principles and spirit of the present disclosure, and the scope of the present disclosure is as defined by the appended claims and their equivalents.

## Claims

1. An exterior vehicle door handle, comprising:
a base, the base being provided with a handle cavity and configured for being mounted on a vehicle door; and
a handle grip, the handle grip being rotatably mounted on the base between a closed position and an open position, when the handle grip is in the closed position, an outer surface of the handle grip not protruding from an outer surface of the vehicle door and covering the handle cavity, and when the handle grip rotates from the closed position to the open position by rotating towards an interior of the handle cavity, the handle grip not protruding from the outer surface of the vehicle door and the handle cavity being exposed.

2. The exterior vehicle door handle according to claim 1, wherein when the handle grip is in the closed position, the outer surface of the handle grip is flush with the outer surface of the vehicle door.

3. The exterior vehicle door handle according to claim 1 or 2, wherein the vehicle door covers a portion of the handle cavity; when being in the closed position, the handle grip covers another portion of the handle cavity; and when being in the open position, the handle grip abuts, in the vehicle door, against the portion of the vehicle door covering the handle cavity.

4. The exterior vehicle door handle according to any one of claims 1 to 3, wherein the handle grip is provided with a rotating shaft, the handle grip is rotatably mounted on the base by the rotating shaft, and the rotating shaft is located at a lower edge of the handle grip when the handle grip is in the closed position.

5. The exterior vehicle door handle according to any one of claims 1 to 4, further comprising:
a driving device, the driving device being configured for being connected to a vehicle door lock and connected to the handle grip, and the driving device driving the handle grip to an intermediate position between the open position and the closed position when the vehicle door lock is unlocked;
wherein an angle by which the handle grip rotates from the closed position to the intermediate position is greater than an angle by which the handle grip rotates from the intermediate position to the open position.

6. The exterior vehicle door handle according to claim 5, wherein the handle grip is configured to rotate from the closed position to the intermediate position by rotating 110° to 120° towards the interior of the handle cavity; and
the handle grip is configured to rotate from the intermediate position to the open position by rotating 50° to 60° towards the interior of the handle cavity.

7. The exterior vehicle door handle according to claim 5 or 6, wherein the driving device is a motor, the motor is mounted outside the base, and the motor is drive-connected to the handle grip and configured for communication of the vehicle door lock.

8. The exterior vehicle door handle according to any one of claims 5 to 7, wherein the driving device comprises:
a push rod, one end of the push rod being configured for being drive-connected to the vehicle door lock; and
an unlocking crank, the unlocking crank being drive-connected to the handle grip and connected to another end of the push rod by an unlocking push rod buckle.

9. A vehicle door assembly, comprising:
a vehicle door; and
the exterior vehicle door handle according to any one of claims 1 to 8.

10. The vehicle door assembly according to claim 9, wherein the vehicle door comprises:
an exterior vehicle door panel and an interior vehicle door panel, the exterior vehicle door panel being mounted on an outer side of the interior vehicle door panel, the base being mounted on the exterior vehicle door panel and arranged between the exterior vehicle door panel and the interior vehicle door panel, and the exterior vehicle door panel being provided with a handle opening, a position of the handle opening corresponding to a position of the handle cavity.

11. The vehicle door assembly according to claim 10, wherein one side of the exterior vehicle door panel facing the interior vehicle door panel is provided with a first positioning protrusion and a second positioning protrusion spaced apart in an up-down direction; the base is provided with a first fixing lug and second fixing lugs; the base is arranged between the first positioning protrusion and the second positioning protrusion; the first fixing lug is fixed on one side of the first positioning protrusion facing the interior vehicle door panel; and the second fixing lugs are fixed on one side of the second positioning protrusion facing the interior vehicle door panel.

12. A vehicle, comprising the vehicle door assembly according to any one of claims 9 to 11.
